# FASCICULE DE BREVET EUROPEEN

(11) **EP 2 886 404 B1**
(45) Date de publication et mention de la délivrance du brevet: **17.02.2021**
(21) Numéro de dépôt: 14196426.2
(22) Date de dépôt: 05.12.2014
(51) Int. Cl.: B60S 1/38

(54) **Connecteurs pour un balai d'essuie-glace de véhicule**
Anschlüsse für ein Scheibenwischer eines Fahrzeugs
Connectors for a vehicle windscreen wiper

(30) Priorité: 20.12.2013 FR 1363275
(43) Date de publication de la demande: 24.06.2015
(73) Titulaire: Valeo Systèmes d'Essuyage, 78322 Le Mesnil Saint Denis (FR)
(72) Inventeur: Jarasson, Jean-Michel, 78321 LE MESNIL SAINT DENIS (FR); Izabel, Vincent, 91380 CHILLY MAZARIN (FR); Caillot, Gérald, 78720 CERNAY LA VILLE (FR); Barret, Guillaume, 63270 LAPS (FR); Bousset, Xavier, 63115 MEZEL (FR); Thebault, Denis, 63000 Clermont Ferrand (FR)
(74) Mandataire: Valeo Visibility

(56) Documents cités:
- EP-A1- 2 402 222
- EP-A1- 2 460 700
- EP-A1- 2 607 187
- WO-A1-2012/072299
- DE-A1-102011 050 104
- FR-A1- 2 971 470

## Description

### DOMAINE TECHNIQUE

La présente invention concerne des connecteurs, en particulier électrique, hydraulique et mécanique, pour un balai d'essuie-glace de véhicule, en particulier automobile, ainsi qu'un balai d'essuie-glace comportant au moins l'un de ces connecteurs.

### ETAT DE L'ART

Les automobiles sont couramment équipées de systèmes d'essuie-glace pour assurer un essuyage et un lavage du pare-brise et éviter que la vision qu'a le conducteur de son environnement ne soit perturbée. Ces systèmes comprennent des bras effectuant un mouvement de va-et-vient angulaire, au bout desquels sont installés des balais d'essuie-glace allongés, porteurs eux-mêmes de lames racleuses réalisées en une matière élastique. Les lames frottent contre le pare-brise et évacuent l'eau en l'amenant en dehors du champ de vision du conducteur.

Les systèmes d'essuie-glace peuvent comprendre des moyens de projection de liquide lave-glace sur le pare-brise. Ces moyens de projection peuvent être situés sur le capot, sur la grille de baie de pare-brise ou, dans une version plus récente, sur les balais d'essuie-glace, ceci en particulier pour les balais de type plat ou « flat blade » en anglais, c'est-à-dire, pour les balais présentant par eux-mêmes un cintrage leur permettant d'être montés sur les bras sans l'intermédiaire d'étriers ou de palonniers.

Dans le cas de moyens de projection intégrés au balai, le liquide lave-glace est acheminé jusqu'aux moyens de projection, tels que des buses, par des conduites fixées au bras et raccordées par un connecteur hydraulique à un système de distribution du liquide intégré au connecteur mécanique du balai, ce connecteur mécanique permettant d'établir une liaison articulée entre le bras et le balai.

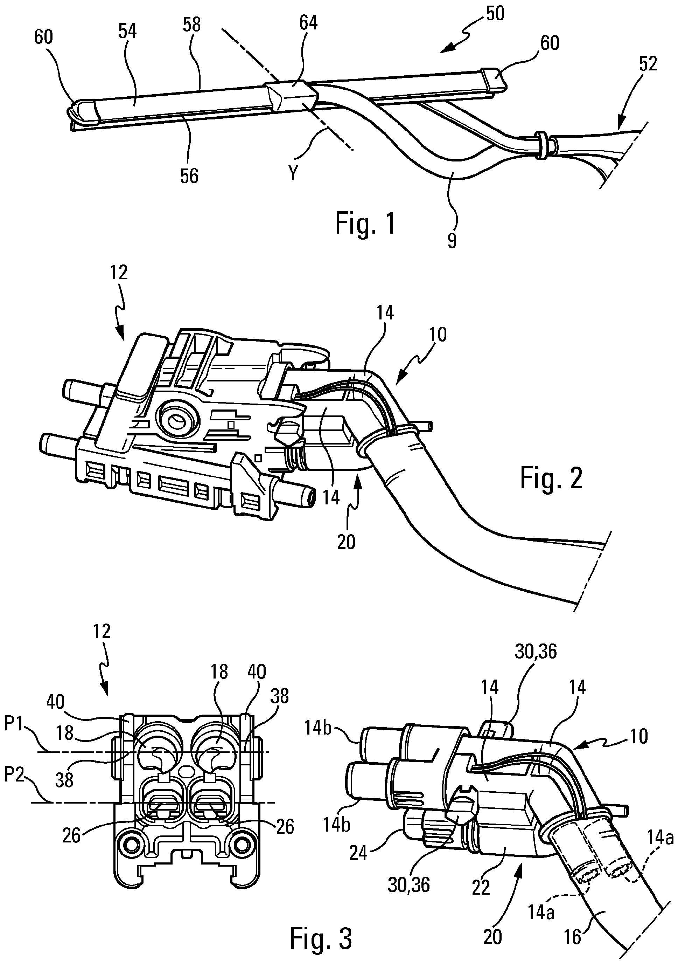

La demande de brevet FR 2 971 470 de la demanderesse décrit un connecteur hydraulique de ce type. Les figures 2 et 3 de la présente demande sont des figures issues de cette demande antérieure et montrant un connecteur hydraulique 10 fixé à un connecteur mécanique 12 en figure 2 et détaché de ce connecteur mécanique en figure 3. Le connecteur hydraulique 10 comporte deux canules 14 présentant chacune une extrémité tubulaire d'entrée 14a configurée pour être raccordée à une conduite de liquide 16 et une extrémité tubulaire de sortie 14b configurée pour être raccordée au connecteur mécanique 12 du balai. Le connecteur mécanique 12 comprend des embouts tubulaires 18 destinés à recevoir par emboîtement les extrémités tubulaires de sortie 14b des canules 14 du connecteur hydraulique 10.

Il est également connu d'intégrer au balai des moyens de chauffage, en particulier du liquide lave-glace. Du liquide chauffé peut ainsi être projeté sur le pare-brise du véhicule, ce qui est avantageux en hiver pour limiter la formation de givre sur le pare-brise et pour accélérer sa suppression lors du démarrage du véhicule. Les moyens de chauffage intégrés au balai d'essuie-glace permettent aussi de réchauffer la structure pour faire fonctionner la lame racleuse dans des conditions optimales, et dégivrer le balai pour éviter l'accumulation de neige, et le bouchage des buses le long du balai d'essuie-glace.

Le balai d'essuie-glace intègre alors des conducteurs électriques chauffants qui sont alimentés en électricité par des fis électriques fixés au bras et reliés par un connecteur électrique à un système de liaison électrique intégré au connecteur mécanique du balai.

La demande de brevet FR 2 971 470 précitée décrit un connecteur électrique de ce type (cf. figures 2 et 3 issues de cette demande antérieure). Le connecteur électrique 20 comporte un corps 22 portant des fiches 24 de connexion électrique configurées pour être connectés par emboîtement à des fiches 26 complémentaires du connecteur mécanique 12 du balai.

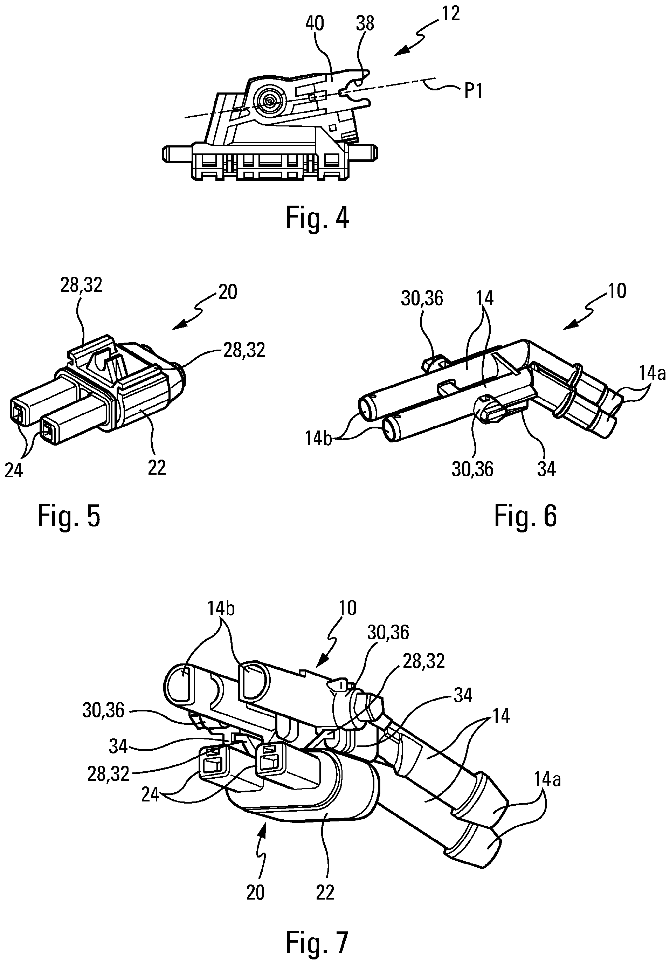

Dans la technique antérieure représentée aux figures 2 et 3, ainsi qu'aux figures 4 à 7, le connecteur électrique 20 comprend des moyens 28 de fixation sur le connecteur hydraulique 10 qui comprend lui-même des moyens 30 de fixation au connecteur mécanique 12 du balai. Autrement dit, le connecteur électrique 20 est fixé et maintenu sur le connecteur mécanique 12 par l'intermédiaire du connecteur hydraulique 12. Les moyens 28 de fixation du connecteur électrique 20 au connecteur hydraulique 10 comportent des rails 32 parallèles portés par le corps 22 du connecteur électrique 20 et destinés à coopérer par coulissement longitudinal avec des glissières 34 parallèles portés par le connecteur hydraulique 10. Les moyens 30 de fixation du connecteur hydraulique 10 au connecteur mécanique 12 comportent des tourillons 36 destinés à coopérer par encliquetage élastique avec des encoches 38 de pattes 40 du connecteur mécanique 12. Les pattes 40 du connecteur mécanique 12 sont parallèles et symétriques par rapport à un plan longitudinal médian du connecteur mécanique 12. Les pattes 40 comprennent à leurs extrémités libres lesdites encoches 38. On constate aux figures 3 et 4 que les embouts tubulaires 18 du connecteur mécanique 12 présentent des axes longitudinaux contenus dans un plan P1 qui passe par lesdites encoches 38. Les fiches 26 du connecteur mécanique 12 présentent des axes longitudinaux contenus dans un plan P2 parallèle au plan P1 (figure 3).

Le document FR 2 971 470 A1 décrit le préambule de la première revendication.

La technologie antérieure décrite ci-dessus présente toutefois des inconvénients. Des jeux de montage existent entre les fiches 24 du connecteur électrique 20 et celles 26 du connecteur mécanique 12. En fonctionnement, des vibrations du véhicule peuvent être transmises par le bras jusqu'au balai, et peuvent provoquer l'apparition de micro-mouvements entre les fiches 24, 26 et générer un phénomène d'usure des surfaces de contact entre ces fiches (par « *fretting corrosion* »), ce qui peut à terme se traduire par une perte de l'alimentation électrique du balai. Par ailleurs, le connecteur électrique 20 n'est pas retenu efficacement en direction longitudinale par le connecteur hydraulique 10, et peut se déplacer en direction longitudinale, favorisant l'apparition des micro-mouvements précités.

La présente invention propose une solution simple, efficace et économique à au moins une partie de ces inconvénients.

### EXPOSE DE L'INVENTION

L'invention propose un dispositif de connexion pour un balai d'essuie-glace de véhicule, en particulier automobile, comprenant un connecteur électrique, un connecteur hydraulique et un connecteur mécanique, le connecteur électrique comportant un corps portant des fiches de connexion électrique, le connecteur hydraulique étant configuré pour approvisionner en liquide lave-glace le connecteur mécanique, ledit corps du connecteur électrique comprenant des premiers moyens de fixation de manière détachable qui coopèrent avec le connecteur mécanique, lesdits premiers moyens de fixation étant indépendants desdites fiches, le dispositif de connexion étant caractérisé en ce que le connecteur électrique comprend des seconds moyens de fixation par encliquetage élastique au connecteur hydraulique, lesdits premiers et seconds moyens étant indépendants.

Dans la présente demande, on entend par moyens de fixation des moyens assurant une fixation et une retenue d'un élément vis-à-vis d'un autre élément. Un simple emboîtement n'est pas ici considéré comme une fixation sauf si les moyens d'emboîtement d'un élément dans un autre élément comportent eux-mêmes des moyens de verrouillage destinés à coopérer directement avec cet autre élément.

Ainsi, le connecteur électrique du dispositif de connexion selon l'invention est fixé directement sur le connecteur mécanique et maintenu en place par ce dernier, ce qui n'était pas le cas dans la technique antérieure (dans laquelle le connecteur électrique était fixé au connecteur mécanique par l'intermédiaire du connecteur hydraulique). Cette fixation est assurée par des moyens de fixation portés par le corps du connecteur électrique et qui sont indépendants des fiches portées par ce corps, qui sont en général destinées à coopérer par emboîtement avec des fiches complémentaires du connecteur mécanique. Ceci est particulièrement avantageux car cela permet de limiter voire de supprimer les micro-mouvements relatifs entre les connecteurs électrique et mécanique, et d'assurer une liaison électrique pérenne entre eux.

Lesdits premiers moyens de fixation du connecteur électrique sont de préférence en saillie sur ledit corps du connecteur électrique. Les premiers moyens de fixation peuvent être configurés pour coopérer par encliquetage élastique avec ledit connecteur mécanique.

Les premiers moyens de fixation du connecteur électrique peuvent comprendre deux tourillons. Ces tourillons peuvent être sensiblement coaxiaux et/ou cylindriques. Ils s'étendent de préférence dans des directions sensiblement opposées. Les axes des tourillons et des fiches peuvent s'étendre dans un même plan.

Le corps du connecteur peut avoir une forme générale parallélépipédique dont une face avant est reliée auxdites fiches, et deux faces latérales opposées sont reliées auxdits premiers moyens de fixation.

Le connecteur électrique est donc fixé par encliquetage élastique sur le connecteur hydraulique (et non pas par coulissement longitudinal, comme dans la technique antérieure), ce qui peut notamment permettre de diminuer l'encombrement longitudinal du connecteur électrique.

Le corps du connecteur électrique peut comprendre des moyens de retenue qui coopèrent par butée avec le connecteur hydraulique. Ces moyens de retenue sont de préférence indépendants des premiers et seconds moyens de retenue.

La présente invention concerne enfin un balai d'essuie-glace d'un véhicule, en particulier automobile, caractérisé en ce qu'il comprend un dispositif de connexion tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un système d'essuie-glace de véhicule qui comprend des moyens d'alimentation électrique et en liquide lave-glace du balai d'essuie-glace,
- la figure 2 est une vue schématique en perspective de connecteurs d'un balai d'essuie-glace selon l'art antérieur,
- la figure 3 est une autre vue schématique en perspective des connecteurs de la figure 2, les connecteurs hydraulique et électrique étant séparés du connecteur mécanique, ce dernier étant vu de face ;
- la figure 4 est une autre vue schématique de côté du connecteur mécanique du balai d'essuie-glace selon l'art antérieur,
- les figures 5 et 6 sont des vues schématiques en perspective des connecteurs électrique et hydraulique, respectivement, du balai d'essuie-glace selon l'art antérieur,
- la figure 7 est une autre vue schématique en perspective des connecteurs électrique et hydraulique des figures 5 et 6, qui sont ici fixés ensemble ;
- la figure 8 est une vue schématique de côté d'un connecteur mécanique d'un balai d'essuie-glace selon un mode de réalisation de l'invention,
- les figures 9 et 10 sont des vues schématiques en perspective des connecteurs électrique et hydraulique, respectivement, du balai d'essuie-glace selon l'invention,
- les figures 11 à 13 sont d'autres vues schématiques en perspective des connecteurs électrique et hydraulique du balai d'essuie-glace selon l'invention, qui sont séparés l'un de l'autre en figure 11 et fixés ensemble aux figures 12 et 13 ; et
- la figure 14 est une vue schématique de côté des connecteurs assemblés du balai d'essuie-glace selon l'invention.

### DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuyage selon l'invention. La direction longitudinale correspond à l'axe principal du balai dans lequel il s'étend, alors que les orientations latérales (respectivement avant et arrière) correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur le bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

Il est illustré à la figure 1 un système d'essuie-glace de pare-brise d'un véhicule, en particulier automobile. Ce système comprend un balai 50 d'essuie-glace du pare-brise et un bras 52 d'entraînement de ce balai qui est partiellement représenté et destiné à être entraîné par un moteur pour suivre un mouvement angulaire de va-et-vient permettant d'évacuer l'eau et éventuellement d'autres éléments indésirables recouvrant le pare-brise.

De façon connue, le balai 50 comprend un corps longitudinal 54, une lame racleuse 56 en général en caoutchouc, et au moins une vertèbre de rigidification (non visible) qui confère un cintrage à la lame 56 de manière à favoriser l'application de cette lame sur le pare-brise. Le corps 54 du balai 50 comporte un déflecteur aérodynamique supérieur 58 destiné à améliorer le fonctionnement du système d'essuie-glace, le but de ce déflecteur étant d'améliorer le plaquage du balai sur le pare-brise et donc la performance aérodynamique du système.

Le balai 50 comprend en outre des embouts ou agrafes d'accrochage 60 de la lame 56 et de la vertèbre sur le corps, ces agrafes 60 étant situées à chacune des extrémités longitudinales du corps 54.

Le corps 54 du balai est ici réalisé en deux parties indépendantes qui sont disposées sensiblement bout à bout et raccordées l'une à l'autre par un connecteur mécanique 62 intermédiaire (représenté en figure 83). Ce connecteur mécanique 62 est donc intercalé entre les deux parties du corps 54.

Pour assurer son montage sur le bras 52, le balai 50 comprend un adaptateur (non représenté) monté sur le connecteur 62 et permettant une articulation du balai 50 par rapport au bras 52. L'articulation du balai 50 par rapport au bras 52 est une articulation selon un mouvement de rotation autour d'un axe de rotation Y perpendiculaire à l'axe longitudinal du balai 50. Le balai 50 doit en effet présenter au moins un degré de liberté en rotation par rapport au bras 52, et plus spécifiquement par rapport à une pièce terminale 64 du bras 52, pour permettre au balai 50 de suivre la courbure du pare-brise.

Le balai 50 comprend des moyens (non représentés) de projection de liquide lave-glace sur le pare-brise, telles que des rampes d'arrosage, et des moyens (non représentés) de chauffage du balai d'essuie-glace 50.

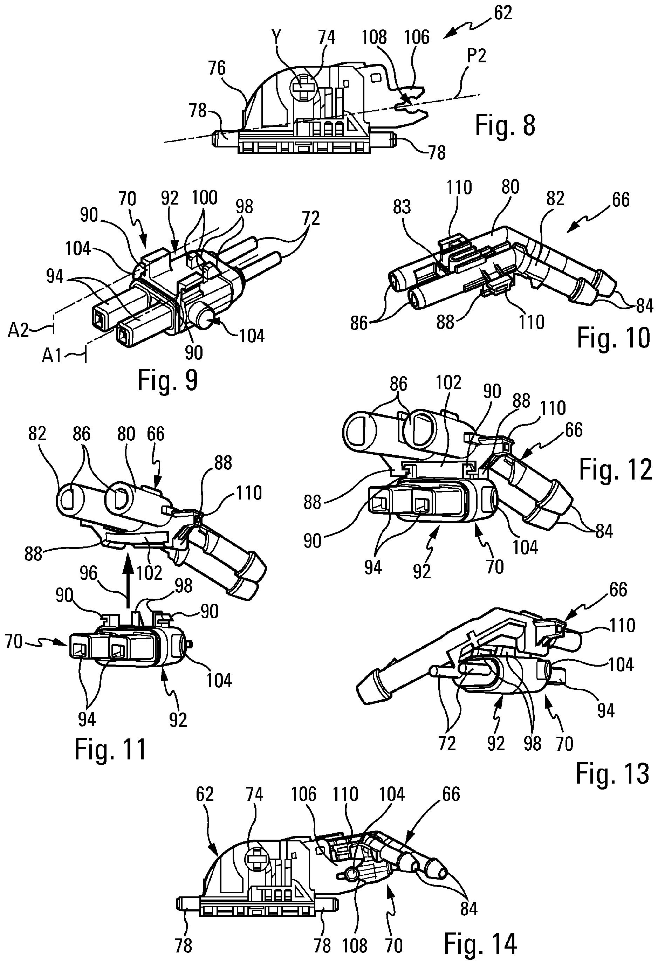

Les moyens de projection sont alimentés en liquide lave-glace par un système de distribution de liquide intégré au connecteur mécanique 62 qui est lui-même alimenté en liquide lave-glace par un connecteur hydraulique 66 (figure 10 à 14) relié par une conduite 68 (figure 1) à une pompe et à un réservoir de liquide lave-glace du véhicule.

Le balai d'essuie-glace 50 est ici équipé de deux rampes d'arrosage (non représentée) qui sont situées de chaque côté du balai. Chaque rampe est pourvue d'un gicleur ou d'une multitude de gicleurs ou orifices d'arrosage sous pression, permettant la distribution du liquide lave-glace sur le pare-brise.

En fonctionnement, du liquide lave-glace est envoyé uniquement sur la partie avant du balai, c'est-à-dire que du liquide lave-glace est envoyé sur la rampe d'arrosage située du côté duquel le bras du balai d'essuie-glace avance pendant une phase montante du balayage et de l'autre côté pendant la phase descendante du balayage. Cet agencement permet d'essuyer instantanément le liquide lave-glace après son dépôt sur le pare-brise, supprimant ainsi tout intervalle durant lequel la vision aurait pu être réduite.

Les moyens de chauffage comprennent un ou plusieurs conducteurs électriques chauffants, réalisés en matériau résistif, qui sont alimentés en électricité par un système de liaison électrique intégré au connecteur mécanique 62 qui est lui-même alimenté en électricité par un connecteur électrique 70 (figure 9 et 11 à 14) relié par des fils électriques 72 à un calculateur du véhicule.

Le balai d'essuie-glace 50 peut comprendre un film résistif chauffant porté par la vertèbre de rigidification du balai et relié par le système de liaison électrique du connecteur mécanique 62 au connecteur électrique 70.

Le connecteur mécanique 62 est solidarisé de manière indémontable sur le balai 50 de façon à assurer ainsi la transmission de l'effort mécanique en provenance du bras 52 vers le balai 50. Il présente une forme sensiblement parallélépipédique s'étendant dans l'axe du balai, avec deux flancs latéraux desquels s'étendent latéralement deux tourillons 74 qui ont pour fonction, d'une part, de solidariser le connecteur mécanique 62 à l'adaptateur (non représenté) et, d'autre part, de servir, d'axe pour la rotation du balai 50 par rapport au bras 52.

Du côté extérieur, le connecteur mécanique 62 présente une paroi 76, dénommée casquette, qui, en premier lieu, ferme la partie avant de la pièce terminale 64 et joue un rôle d'écran pour protéger les composants contenus à l'intérieur de cette pièce terminale 64 et, en second lieu, assure une finition extérieure de bonne facture. La face du connecteur 62 opposée à la casquette 76, dite face intérieure, comporte des embouts tubulaires de raccordement hydraulique et des fiches de connexion électrique, configurés pour coopérer respectivement avec des moyens complémentaires du connecteur hydraulique 66 et du connecteur électrique 70.

Cette face intérieure du connecteur mécanique 62 comprend deux embouts tubulaires qui sont sensiblement identiques aux embouts tubulaires 18 visibles en figure 3 qui représente la technique antérieure. Ces embouts tubulaires sont prolongés par des canaux internes de distribution du liquide lave-glace (non représentés) s'étendant à l'intérieur du connecteur mécanique 62 pour déboucher au droit de conduits 78 d'alimentation des rampes d'arrosage du balai 50.

La face intérieure du connecteur mécanique 62 comprend deux fiches qui sont également sensiblement identiques aux fiches 26 visibles en figure 3 qui représente la technique antérieure.

Le connecteur hydraulique 66 assure l'approvisionnement en liquide lave-glace du connecteur mécanique 62. Il se présente sous la forme de deux canules 80, 82 positionnées en parallèle longitudinalement et reliées mécaniquement l'une à l'autre par des ponts de solidarisation ou de liaison 83 (figure 4). A titre d'exemple, quand la canule 80 ou 82 forme un tube de section cylindrique, la direction d'extension de la canule est formée par une droite centrée de la section cylindrique.

Ces canules 80, 82 comportent chacune deux secteurs (respectivement intérieur et extérieur) qui s'étendent selon des directions orientées angulairement l'une par rapport à l'autre, la jonction entre ces secteurs formant un coude. Une telle structure permet d'adapter la forme des canules 80, 82 à la forme de la pièce terminale 64 sous laquelle elles sont placées. Du côté intérieur, ces canules 80, 82 comporte chacune une première extrémité tubulaire d'entrée 84 sur laquelle vient s'emmancher la conduite 68 d'alimentation en liquide lave-glace. Du côté extérieur, chacune des canules 80, 82 a une seconde extrémité tubulaire de sortie 86 de forme cylindrique apte à s'insérer dans l'un des embouts tubulaires de la face intérieure du connecteur mécanique 62. Des joints toriques (non visibles) peuvent être placés à proximité de ces secondes extrémités 86 pour assurer l'étanchéité entre les canules 80, 82 et les embouts dans lesquels elles pénètrent. Les secondes extrémités 86 des canules 80, 82 coopèrent ici par emboîtement avec les embouts du connecteur mécanique 62, cet emboîtement étant du type mâle-femelle, les secondes extrémités 86 étant du type mâle et les embouts du connecteur 62 étant du type femelle.

A sa partie inférieure, le connecteur hydraulique 66 comporte des moyens de fixation 88 configurés pour coopérer par encliquetage élastique avec des moyens de fixation 90 complémentaires du connecteur électrique 70. Les moyens de fixation 88 comportent ici deux crochets parallèles et à distance l'un de l'autre. Ils s'étendent sensiblement parallèlement aux axes longitudinaux des secteurs extérieurs des canules 80, 82 et s'étendent vers le bas depuis ces secteurs extérieurs. Chaque crochet comprend une paroi longitudinale plane reliée à son extrémité inférieure libre à un rebord latéral orienté vers l'autre crochet et formant une dent d'accrochage. Les crochets sont élastiquement déformables en particulier en flexion, de façon à ce que leurs dents d'accrochage puissent notamment s'écarter l'une de l'autre.

Le connecteur électrique 70 apporte la puissance électrique nécessaire au fonctionnement des éléments chauffants intégrés au balai. Il comporte un corps 92 de forme générale parallélépipédique qui comporte une face avant, une face arrière, deux faces latérales et des faces, respectivement supérieure et inférieure. Le connecteur électrique 70 comprend deux fiches 94 qui sont reliées à la face avant du corps 92 du connecteur et qui sont connectés aux fils électriques 72 qui traversent des orifices de la face arrière du corps 92. Les fiches 94 sont ici formées par des tubes creux dans lesquels sont positionnés des connecteurs métalliques reliés électriquement aux fils 72.

Le corps 92 du connecteur électrique 70 comporte sur sa face supérieure les moyens 90 précités de fixation au connecteur hydraulique 66. Les moyens de fixation 90 comportent ici deux crochets parallèles et à distance l'un de l'autre. Ils s'étendent respectivement dans des plans A1, A2 parallèles entre eux et aux axes longitudinaux des fiches 94. Ils s'étendent vers le haut depuis la face supérieure du corps 92 du connecteur 70. Chaque crochet comprend une paroi longitudinale plane reliée à son extrémité supérieure libre à un rebord latéral orienté vers l'autre crochet et formant une dent d'accrochage. Les crochets sont élastiquement déformables en particulier en flexion, de façon à ce que leurs dents d'accrochage puissent notamment se rapprocher l'une de l'autre.

Comme cela est représenté aux figures 11 et 12, le connecteur électrique 70 est fixé au connecteur hydraulique 66 par encliquetage élastique des moyens de fixation 88 dans les moyens de fixation 90. Les crochets des moyens de fixation 88 sont écartés l'un de l'autre d'une distance prédéterminée de façon à ce qu'ils puissent s'insérer de part et d'autre des crochets des moyens de fixation 90, par encliquetage élastique.

Pour réaliser la fixation entre les connecteurs 70, 66, le connecteur électrique 70 est positionné sous le connecteur hydraulique 66, parallèlement à celui-ci, et le connecteur électrique 70 est déplacé en translation (flèche 96 en figure 11) vers le connecteur hydraulique 66, dans une direction sensiblement perpendiculaire aux axes longitudinaux des fiches 94 du connecteur 70, jusqu'à ce que les dents des moyens de fixation 90 viennent en appui sur les dents de moyens de fixation 88 du connecteur hydraulique, pour les écarter l'une de l'autre et pour laisser passer les moyens de fixation 90 entre les moyens de fixation 88, comme cela est visible en figure 12.

Le corps 92 du connecteur électrique 70 comporte en outre sur sa face supérieure des moyens de retenue du connecteur hydraulique 66. Ces moyens de retenue comprennent deux doigts 98 en saillie sur la face supérieure du corps 92 du connecteur 70, et comportant chacun une face d'appui 100 plane orientée du côté des fiches 94. Les doigts 98 sont sensiblement parallèles. Ils sont ici situés entre les plans A1 et A2. Les doigts 98 sont destinés à venir en appui par leurs faces d'appui 100 sur une paroi transversale 102 du connecteur hydraulique 66, visible aux figures 11 et 12. Cette paroi transversale 102 s'étend entre les canules 80, 82 du connecteur 66. Elle s'étend vers le bas depuis les secteurs extérieurs des canules 80, 82, et comprend une face orientée vers les premières extrémités 84 des canules 80, 82 et destinées à coopérer par butée avec les faces d'appui 100 des doigts 98 du connecteur électrique 70.

Dans la position de montage des connecteurs 66, 70 représentée en figure 12, les doigts 98 s'étendent du côté intérieur de la paroi 102 et sont en appui par leurs faces 100 sur la face intérieure de cette paroi 102. Ceci assure la retenue du connecteur hydraulique 66 vers l'intérieur, c'est-à-dire du côté opposé au connecteur mécanique 62.

Latéralement, le connecteur électrique 66 comporte deux tourillons cylindriques 104 qui sont en saillie sur les faces latérales du corps 92 du connecteur 66, et s'étendent dans des directions opposées. Les axes longitudinaux des tourillons 104 et des fiches 94 du connecteur 70 s'étendent sensiblement dans un même plan sensiblement horizontal. Ces tourillons 104 se développent ou s'étendent latéralement jusqu'à former un axe dont la longueur est proche de la largeur de la pièce terminale 64, tout en lui restant inférieure pour permettre un déplacement du connecteur électrique 70 dans la pièce terminale 64.

Le connecteur mécanique 62 comporte sur ses faces latérales des moyens de verrouillage qui prennent la forme d'extensions longitudinales issues de moulage sur les faces latérales du connecteur mécanique 62. Ces moyens de verrouillage présentent une forme de pattes 106 qui ont pour fonction de coopérer avec les tourillons 104 portés par le connecteur électrique 70. Pour cela, l'extrémité longitudinale de chaque patte 106 est fendue selon la direction longitudinale pour former deux branches parallèles qui présentent, entre elles, une encoche ou découpe circulaire 108 conformée pour recevoir par encliquetage élastique l'un des tourillons 104. Par opposition à la technique antérieure (cf. figure 3), dans laquelle les embouts tubulaires 18 du connecteur mécanique 12 présentent des axes longitudinaux contenus dans un plan P1 qui passe par les encoches 38 du connecteur mécanique 12, c'est ici le plan P2 (contenant les axes longitudinaux des fiches 26) du connecteur mécanique 62 qui passe par les encoches 108 du connecteur mécanique 62 (figure 8).

Les branches de chaque patte 106 du connecteur mécanique 62 sont élastiquement déformables et destinées à s'écarter l'une de l'autre pour laisser passer un tourillon 104 lors de l'introduction du connecteur électrique 70, puis de revenir dans leur position initiale, du fait de leur élasticité, pour emprisonner ce tourillon 104 et l'empêcher de ressortir de l'encoche 108, quand le connecteur électrique 70 est en position de montage, c'est-à-dire inséré dans le connecteur mécanique 62. La présence de cette encoche 108 impose d'effectuer une traction suffisante sur le connecteur électrique 70 pour le retirer du connecteur mécanique 62, définie pour être supérieure aux efforts qui s'exercent en utilisation, de façon à ce qu'il n'y ait pas de désaccouplement intempestif. Elle génère également un point dur qui permet à l'opérateur de confirmer la bonne insertion du connecteur électrique 70 sur le connecteur mécanique 62 lors du montage du balai 50.

Bien que, latéralement, le connecteur hydraulique 66 comporte deux excroissances 110 s'étendant dans des directions opposées (figures 10 à 14), ces excroissances ne coopèrent pas avec le connecteur mécanique 62 comme cela est clairement visible en figure 14.

On comprend ainsi que, par opposition à la technique antérieure, le connecteur électrique 70 est fixé directement sur le connecteur mécanique 62, par encliquetage élastique de ses tourillons 104 dans les encoches 108 du connecteur mécanique 62. Cela permet de limiter voire de supprimer les micro-mouvements relatifs entre les connecteurs électrique 70 et mécanique 62, et d'assurer une liaison électrique pérenne entre eux.

On va maintenant décrire le remplacement d'un balai d'essuie-glace 50 sur un bras 52, comprenant le démontage du balai usagé et son remplacement par un balai neuf.

L'opérateur commence par mettre le balai 50 en position de service, en l'écartant angulairement de la direction longitudinale du bras 52 et de la pièce terminale 64. Le connecteur hydraulique 66 est maintenu longitudinalement par le connecteur électrique 70 dont les tourillons 104 sont engagés dans les encoches 108 des pattes 106 du connecteur mécanique 62. Ce mouvement vers la position de service fait tourner le balai 50 par rapport à l'adaptateur, qui reste aligné avec la pièce terminale 64 sur laquelle il est monté. Après avoir désolidarisé l'adaptateur de la pièce terminale 64, en appuyant en général sur un bouton escamotable, l'opérateur peut faire glisser l'adaptateur dans la pièce terminale, soit en tirant sur l'adaptateur, soit sur le connecteur mécanique 62. En tirant sur l'adaptateur, l'opérateur libère les tourillons 104 en les extrayant des encoches 108 du connecteur mécanique 62, ce qui autorise un déplacement relatif de l'adaptateur, du connecteur mécanique 62 et du balai 50, par rapport à la pièce terminale 64, jusqu'à obtenir la désolidarisation complète du balai 50 par rapport au bras 52.

Le montage d'un balai neuf s'effectue dans le sens inverse. L'adaptateur est tout d'abord ouvert pour le mettre à angle avec le connecteur mécanique 62 puis est aligné sur la pièce terminale 64 avant d'être introduit dans le volume interne de la pièce terminale 64. En poursuivant l'action de poussée du connecteur mécanique 62 et de l'adaptateur contre la pièce terminale 64, les secondes extrémités tubulaires 86 des canules 80, 82 s'insèrent dans les embouts du connecteur mécanique 62 et les fiches 94 du connecteur électrique 70 s'insèrent dans les fiches du connecteur mécanique 62, jusqu'à ce que les tourillons 104 du connecteur électrique 70 s'engagent dans les encoches 108 du connecteur mécanique 62. Puis, l'opérateur referme le balai 50 contre le bras 52, c'est à dire le passe de la position de service à celle d'utilisation. Les tourillons 104 restent bloqués dans les encoches 108 du connecteur mécanique 62, ce qui assure la solidarisation de ces deux pièces et écarte toute crainte d'un désassemblage de la liaison électrique en cours d'utilisation. Le connecteur électrique 70 maintient longitudinalement le connecteur hydraulique 66 vis-à-vis du connecteur mécanique 62, ce qui assure la solidarisation de ces pièces et écarte toute crainte d'un désassemblage de la liaison hydraulique en cours d'utilisation. Bien que l'invention ait été décrite dans ce qui précède en relation avec un connecteur hydraulique à deux canules pour l'alimentation en liquide lave glace d'un balai bi-rampe, il est bien entendu envisageable d'appliquer cette invention à un connecteur hydraulique comportant une seule canule pour l'alimentation en liquide lave glace d'un balai mono-rampe.

## Revendications

1. Dispositif de connexion (70, 66, 62) pour un balai d'essuie-glace (50) de véhicule, en particulier automobile, comprenant un connecteur électrique (70), un connecteur hydraulique (66) et un connecteur mécanique (62), le connecteur électrique (70) comportant un corps (92) portant des fiches (94) de connexion électrique, le connecteur hydraulique (66) étant configuré pour approvisionner en liquide lave-glace le connecteur mécanique (62), ledit corps du connecteur électrique (70) comprenant des premiers moyens (104) de fixation de manière détachable qui coopèrent avec le connecteur mécanique (62), lesdits premiers moyens de fixation étant indépendants desdites fiches, le dispositif de connexion étant **caractérisé en ce que** le connecteur électrique (70) comprend des seconds moyens de fixation (90) par encliquetage élastique au connecteur hydraulique (66), lesdits premiers et seconds moyens étant indépendants.

2. Dispositif de connexion (70, 66, 62) selon la revendication 1, **caractérisé en ce que** lesdits premiers moyens de fixation (104) sont en saillie sur ledit corps (92) du connecteur électrique (70).

3. Dispositif de connexion (70, 66, 62) selon la revendication 1 ou 2, **caractérisé en ce que** les lesdits premiers moyens de fixation (104) sont configurés pour coopérer par encliquetage élastique avec le connecteur mécanique (62).

4. Dispositif de connexion (70, 66, 62) selon l'une des revendications précédentes, **caractérisé en ce que** lesdits premiers moyens de fixation comprennent deux tourillons (104).

5. Dispositif de connexion (70, 66, 62) selon la revendication 4, **caractérisé en ce que** lesdits tourillons (104) sont sensiblement coaxiaux et/ou cylindriques.

6. Dispositif de connexion (70, 66, 62) selon la revendication 4 ou 5, **caractérisé en ce que** lesdits tourillons (104) s'étendent dans des directions sensiblement opposées.

7. Dispositif de connexion (70, 66, 62) selon l'une des revendications 4 à 6, **caractérisé en ce que** les axes des tourillons (104) et des fiches (94) s'étendent dans un même plan.

8. Dispositif de connexion (70, 66, 62) selon l'une des revendications précédentes, **caractérisé en ce que** ledit corps (92) a une forme générale parallélépipédique dont une face avant est reliée auxdites fiches (94), et deux faces latérales opposées sont reliées auxdits premiers moyens de fixation (104).

9. Dispositif de connexion (70, 66, 62) selon l'une des revendications précédentes, **caractérisé en ce que** ledit corps (92) comprend des moyens de retenue (98) qui coopèrent par butée avec le connecteur hydraulique (66).

10. Dispositif de connexion (70, 66, 62) selon l'une quelconque des revendications précédentes, dans lequel le connecteur hydraulique (66) comporte au moins une canule (80, 82) présentant une première extrémité tubulaire d'entrée (84) configurée pour être raccordée à une conduite de liquide (68), et une seconde extrémité tubulaire de sortie (86) raccordée au connecteur mécanique (62), **caractérisé en ce que** le connecteur hydraulique (66) est dépourvu de moyens, autres que ladite seconde extrémité tubulaire, de fixation de manière détachable qui coopère avec ledit connecteur mécanique (62).

11. Dispositif de connexion (70, 66, 62) selon la revendication 10, en dépendance de la revendication 9, **caractérisé en ce que** le connecteur hydraulique (66) comprend une paroi transversale (102) comportant une face située du côté de ladite première extrémité tubulaire (84) et qui coopère par butée avec lesdits moyens de retenue (98) dudit connecteur électrique (70).

12. Dispositif de connexion (70, 66, 62) selon la revendication 10 ou 11, **caractérisé en ce que** le connecteur hydraulique (66) comprend deux canules (80, 82), ladite paroi transversale (102) s'étendant sensiblement entre lesdites canules.

13. Dispositif de connexion (70, 66, 62) selon l'une quelconque des revendications précédentes, dans lequel le connecteur mécanique (62) comporte des fiches de connexion électrique qui coopèrent avec les fiches de connexion électrique (94) complémentaires du connecteur électrique (70), et au moins un embout de raccord fluidique qui coopère avec l'extrémité tubulaire de sortie (86) d'une canule (80, 82) du connecteur hydraulique (66), lesdites fiches du connecteur mécanique présentant des axes longitudinaux contenus dans un plan P2, ledit connecteur mécanique comportant en outre deux pattes (106) sensiblement parallèles présentant à leurs extrémités libres des encoches (108) d'encliquetage élastique, **caractérisé en ce que** ledit plan P2 passe par lesdites encoches.

14. Balai d'essuie-glace (50) d'un véhicule, en particulier automobile, **caractérisé en ce qu'**il comprend un dispositif de connexion (70, 66, 62) selon l'une quelconque des revendications précédentes.

## Patentansprüche

1. Anschlussvorrichtung (70, 66, 62) für ein Scheibenwischerblatt (50) eines Fahrzeugs, insbesondere eines Kraftfahrzeugs, welche einen elektrischen Verbinder (70), einen hydraulischen Verbinder (66) und einen mechanischen Verbinder (62) umfasst, wobei der elektrische Verbinder (70) einen Körper (92) umfasst, der elektrische Anschlussstecker (94) trägt, wobei der hydraulische Verbinder (66) dafür ausgelegt ist, den mechanischen Verbinder (62) mit Scheibenwaschflüssigkeit zu versorgen, wobei der Körper des elektrischen Verbinders (70) erste Mittel (104) zur lösbaren Befestigung umfasst, welche mit dem mechanischen Verbinder (62) zusammenwirken, wobei die ersten Befestigungsmittel unabhängig von den Anschlusssteckern sind, wobei die Anschlussvorrichtung **dadurch gekennzeichnet ist, dass** der elektrische Verbinder (70) zweite Mittel zur Befestigung (90) durch elastisches Einrasten am hydraulischen Verbinder (66) umfasst, wobei die ersten und zweiten Mittel unabhängig sind.

2. Anschlussvorrichtung (70, 66, 62) nach Anspruch 1, **dadurch gekennzeichnet, dass** die ersten Befestigungsmittel (104) am Körper (92) des elektrischen Verbinders (70) vorstehen.

3. Anschlussvorrichtung (70, 66, 62) nach Anspruch 1 oder 2, **dadurch gekennzeichnet, dass** die ersten Befestigungsmittel (104) dafür ausgelegt sind, durch elastisches Einrasten mit dem mechanischen Verbinder (62) zusammenzuwirken.

4. Anschlussvorrichtung (70, 66, 62) nach einem der vorhergehenden Ansprüche, **dadurch gekennzeichnet, dass** die ersten Befestigungsmittel zwei Drehzapfen (104) umfassen.

5. Anschlussvorrichtung (70, 66, 62) nach Anspruch 4, **dadurch gekennzeichnet, dass** die Drehzapfen (104) im Wesentlichen koaxial und/oder zylindrisch sind.

6. Anschlussvorrichtung (70, 66, 62) nach Anspruch 4 oder 5, **dadurch gekennzeichnet, dass** sich die Drehzapfen (104) in im Wesentlichen entgegengesetzten Richtungen erstrecken.

7. Anschlussvorrichtung (70, 66, 62) nach einem der Ansprüche 4 bis 6, **dadurch gekennzeichnet, dass** sich die Achsen der Drehzapfen (104) und der Anschlussstecker (94) in derselben Ebene erstrecken.

8. Anschlussvorrichtung (70, 66, 62) nach einem der vorhergehenden Ansprüche, **dadurch gekennzeichnet, dass** der Körper (92) eine quaderförmige allgemeine Form aufweist, von der eine Vorderfläche mit den Anschlusssteckern (94) verbunden ist und zwei einander gegenüberliegende Seitenflächen mit den ersten Befestigungsmitteln (104) verbunden sind.

9. Anschlussvorrichtung (70, 66, 62) nach einem der vorhergehenden Ansprüche, **dadurch gekennzeichnet, dass** der Körper (92) Haltemittel (98) umfasst, welche durch Anschlag mit dem hydraulischen Verbinder (66) zusammenwirken.

10. Anschlussvorrichtung (70, 66, 62) nach einem der vorhergehenden Ansprüche, wobei der hydraulische Verbinder (66) wenigstens ein Röhrchen (80, 82) umfasst, das ein erstes rohrförmiges Einlassende (84), das dafür ausgelegt ist, an eine Flüssigkeitsleitung (68) angeschlossen zu werden, und ein zweites rohrförmiges Auslassende (86), das an den mechanischen Verbinder (62) angeschlossen ist, aufweist, **dadurch gekennzeichnet, dass** der hydraulische Verbinder (66) mit keinen anderen Mitteln, außer dem zweiten rohrförmigen Ende, zur lösbaren Befestigung versehen ist, welche mit dem mechanischen Verbinder (62) zusammenwirken.

11. Anschlussvorrichtung (70, 66, 62) nach Anspruch 10 in Abhängigkeit von Anspruch 9, **dadurch gekennzeichnet, dass** der hydraulische Verbinder (66) eine Querwand (102) umfasst, die eine Fläche aufweist, die sich auf der Seite des ersten rohrförmigen Endes (84) befindet und die durch Anschlag mit den Haltemitteln (98) des elektrischen Verbinders (70) zusammenwirkt.

12. Anschlussvorrichtung (70, 66, 62) nach Anspruch 10 oder 11, **dadurch gekennzeichnet, dass** der hydraulische Verbinder (66) zwei Röhrchen (80, 82) umfasst, wobei sich die Querwand (102) im Wesentlichen zwischen den Röhrchen erstreckt.

13. Anschlussvorrichtung (70, 66, 62) nach einem der vorhergehenden Ansprüche, wobei der mechanische Verbinder (62) elektrische Anschlussstecker, die mit den komplementären elektrischen Anschlusssteckern (94) des elektrischen Verbinders (70) zusammenwirken, und wenigstens ein Fluidanschlussstück, welches mit dem rohrförmigen Auslassende (86) eines Röhrchens (80, 82) des hydraulischen Verbinders (66) zusammenwirkt, umfasst, wobei die Anschlussstecker des mechanischen Verbinders Längsachsen aufweisen, die in einer Ebene P2 enthalten sind, wobei der mechanische Verbinder außerdem zwei im Wesentlichen parallele Schenkel (106) umfasst, die an ihren freien Enden Einkerbungen (108) zum elastischen Einrasten aufweisen, **dadurch gekennzeichnet, dass** die Ebene P2 durch diese Einkerbungen verläuft.

14. Scheibenwischerblatt (50) eines Fahrzeugs, insbesondere eines Kraftfahrzeugs, **dadurch gekennzeichnet, dass** es eine Anschlussvorrichtung (70, 66, 62) nach einem der vorhergehenden Ansprüche umfasst.

## Claims

1. A connection device (70, 66, 62) for a windscreen wiper (50) of a vehicle, in particular a motor vehicle, comprising an electrical connector (70), a hydraulic connector (66) and a mechanical connector (62), the electrical connector (70) comprising a body (92) bearing electrical connecting plugs (94), the hydraulic connector (66) being configured to supply windscreen washer fluid to the mechanical connector (62), said body of the electrical connector (70) comprises first means (104) for fixing in a detachable manner which cooperate with the mechanical connector (62), said first means for fixing being independent of said plugs, the connection device being **characterized in that** the electrical connector (70) comprises second means (90) for fixing by elastic snap-fitting to the hydraulic connector (66), said first and second means being independent.

2. Connection device (70, 66, 62) according to Claim 1, **characterised in that** said first means for fixing (104) protrude from said body (92) of the electrical connector (70).

3. Connection device (70, 66, 62) according to Claim 1 or 2, **characterized in that** said first means for fixing (104) are configured to cooperate with said mechanical connector (62) by being resiliently clipped thereto.

4. Connection device (70, 66, 62) according to one of the preceding claims, **characterized in that** said first means for fixing comprise two pins (104).

5. Connection device (70, 66, 62) according to Claim 4, **characterized in that** said pins (104) are substantially coaxial and/or cylindrical.

6. Connection device (70, 66, 62) according to Claim 4 or 5, **characterized in that** said pins (104) extend in substantially opposing directions.

7. Connection device (70, 66, 62) according to one of Claims 4 to 6, **characterized in that** the axes of the pins (104) and the plugs (94) extend in the same plane.

8. Connection device (70, 66, 62) according to one of the preceding claims, **characterized in that** said body (92) has a generally parallelepipedal shape, one front face thereof being connected to said plugs (94) and two lateral opposing faces being connected to said first means for fixing (104).

9. Connection device (70, 66, 62) according to one of the preceding claims, **characterized in that** said body (92) comprises retaining means (98) which are configured to cooperate by abutment with the hydraulic connector (66).

10. Connection device (70, 66, 62) according to one of the preceding claims, wherein the hydraulic connector (66) comprises at least one small tube (80, 82) having a first tubular inlet end (84) which is configured to be connected to a conduit for fluid (68) and a second tubular outlet end (86) which is configured to be connected to a mechanical connector (62) of said wiper, **characterized in that**, , the hydraulic connector (66) does not comprise means, other than said second tubular end, for fixing in a detachable manner which are configured to cooperate with said mechanical connector (62).

11. Connection device (70, 66, 62) according to Claim 10, depending on Claim 9, **characterized in that** the hydraulic connector (66) comprises a transverse wall (102) comprising a face located on the side of said first tubular end (84) and which is configured to cooperate by abutment with said retaining means (98) of said electrical connector (70).

12. Connection device (70, 66, 62) according to Claim 10 or 11, **characterized in that** the hydraulic connector (66) comprises two small tubes (80, 82), said transverse wall (102) extending substantially between said small tubes.

13. Connection device (70, 66, 62) according to one of the preceding claims, wherein the mechanical connector (62) comprises electrical connecting plugs which cooperate with complementary electrical connecting plugs (94) of the electrical connector (70), and at least one end piece for the fluidic connection which cooperates with the tubular outlet end (86) of a small tube (80, 82) of the hydraulic connector (66), said plugs of the mechanical connector having longitudinal axes contained within a plane P2, said mechanical connector further comprising two substantially parallel tabs (106) having at their free ends notches (108) for resilient clipping, **characterized in that** said plane P2 passes through said notches.

14. Windscreen wiper (50) of a vehicle, in particular a motor vehicle, **characterized in that** it comprises a connection device (70, 66, 62) according to one of the preceding claims.
